# EUROPÄISCHE PATENTANMELDUNG

(11) **EP 2 354 311 A2**
(43) Veröffentlichungstag der Anmeldung: **10.08.2011**
(21) Anmeldenummer: 10197280.0
(22) Anmeldetag: 29.12.2010
(51) Int. Cl.: E01C 23/16, G05D 1/02

(54) **Vorrichtung zur Unterstützung einer Aufbringung einer Bodenmarkierung mit einem Fahrzeug sowie Fahrzeug**

(30) Priorität: 28.01.2010 DE 102010001296
(71) Anmelder: Robert Bosch GmbH, 70442 Stuttgart (DE)
(72) Erfinder: Breuing, Holger, 74360, Ilsfeld (DE)

(57) **Zusammenfassung**

Die vorliegende Erfindung betrifft eine Vorrichtung (15) zur Unterstützung einer Aufbringung einer Bodenmarkierung (31,32) mit einem Fahrzeug, wobei die Vorrichtung Sensordaten einer Sensorik (13,14) auswertet, wobei die Sensorik eine Markierung (21) erfasst, dadurch gekennzeichnet, dass die Vorrichtung Daten ausgibt und die Daten eine Lenkung (11) des Fahrzeugs unterstützen. Verfahren für eine Aufbringung einer Bodenmarkierung mit einem Fahrzeug, wobei das Fahrzeug eine Sensorik aufweist, die Sensorik eine Altmarkierung oder eine Vormarkierung erfasst und von der Sensorik erfasste Daten ausgewertet werden. Dabei wird die Lenkung des Fahrzeugs von den ausgewerteten Daten unterstützt wird.

## Beschreibung

### Stand der Technik

Die vorliegende Erfindung betrifft eine Vorrichtung zur Unterstützung einer Aufbringung einer Bodenmarkierung mit einem Fahrzeug sowie ein Fahrzeug hierzu.

Stand der Technik zur Aufbringung von Fahrbahnmarkierungen sind Maschinen, die auf Basis einer vorgezeichneten Linie (Vormarkierung) oder vorhandenen Altmarkierungen eine neue Fahrbahnmarkierung aufbringen. Aus der DE-10321932 B3 ist eine Vorrichtung bzw. ein Verfahren zum Erneuern einer Bodenmarkierungslinie bekannt.

### Offenbarung der Erfindung

### Vorteile der Erfindung

Das Vorrichtung gemäß Anspruch 1 ermöglicht eine genauere, schnellere und damit auch kostengünstigere Aufbringung einer Bodenmarkierung mit einem Fahrzeug. Das Fahrzeug gemäß dem weiteren unabhängigen Anspruch weist eine Vorrichtung nach Anspruch 1 und die damit verbundenen Vorteile auf und kann darüber hinaus über weitere Merkmale verfügen, welche in Kombination mit der Vorrichtung eine besonders effektive Detektion bzw. eine besonders effiziente Aufbringung ermöglichen können.

Weitere Vorteile und Verbesserungen ergeben sich durch die Merkmale der abhängigen Ansprüche.

In einer vorteilhaften Ausgestaltung wird der Fahrer des Markierungsfahrzeugs bei der Lenkung unterstützt, insbesondere durch akustische, optische, haptische oder kinästhetische Signale (oder eine Kombination aus diesen), wodurch die Vorteile einer schnelleren und genaueren Auftragung verknüpft werden mit der erhöhten Sicherheit einer vornehmlich manuellen Lenkung.

In einem dazu alternativen Ausführungsbeispiel wird die Lenkung des Fahrzeugs automatisch vorgenommen, was ein besonders schnelles und genaues Aufbringen der Markierung auf den Boden ermöglicht. Um weiterhin die Sicherheit zu gewährleisten kann in einer speziellen Ausführung diese automatische Lenkung durch den Fahrer jederzeit unterbrochen werden, z.B. können dazu auch Signale generiert werden, wenn eine Unterbrechung der automatischen Lenkung angebracht ist (z.B. das Fahrzeug die Straße verlässt oder nicht mehr der Vor- / Altmarkierung folgt).

In einer besonders vorteilhaften Ausgestaltungsform ist ein Not-Stopp vorgesehen, welcher in bestimmten Situationen automatisch getriggert wird (wiederum z.B. beim Verlassen der Straße oder insbesondere auch aus Kostengründen bei einem Verlassen der Vor- / Altmarkierung).

Besonders vorteilhaft ist es, wenn die Markierungsvorrichtung nicht nur durch die Lenkung, also die Position des Fahrzeugs relativ zur Straße, positioniert werden kann, sondern wenn zusätzlich, zum Beispiel als eine Feinjustage, die Markierungsvorrichtung auch relativ zum Fahrzeug (in alle möglichen Raumrichtungen oder zum Beispiel entlang festgelegter Achsen) positioniert werden kann, insbesondere anhand der registrierten Vor- bzw. Altmarkierung oder abhängig von bestimmten Straßenbegebenheiten (Unebenheiten etc.). Damit ist eine besonders exakte Aufbringung einer Bodenmarkierung möglich.

Eine weiterhin erhöhte Genauigkeit der Bodenmarkierung erreicht man zum Beispiel durch das Verwenden zweier optischer Messfühler, wobei der erste eine Groberfassung der Straße in größerer Entfernung des Fahrzeugs vornimmt und der zweite eine Feinerfassung der Altmarkierung oder Vormarkierung in kleinerer Entfernung zum Fahrzeug ermöglicht.

In einer vorteilhaften Ausführung wird eine Speziallampe vorgesehen, welche den Boden vor dem Fahrzeug bzw. unter dem Fahrzeug beleuchtet und deren Emissioncharakteristik auf die Reflektionseigenschaften der Vor- / Altmarkierung optimiert ist und damit eine besonders exakte und einfache Detektion der Vor-/Altmarkierung ermöglicht.

In verschiedenen Ausgestaltungen kann es vorteilhaft sein, wenn die Bodenmarkierung nicht exakt an der Position der Vor-/Altmarkierung sondern in einem vorgebbaren Abstand hierzu erfolgt. Insbesondere können auch mehrere Bodenmarkierungen in vorgebbaren Abständen zu einer Vor-/Altmarkierung vorgenommen werden, wenn zum Beispiel mehrere Markierungsvorrichtungen vorgesehen sind und die Breite des Fahrzeugs ausreichend ist. Damit ist eine besonders flexible Markierungsaufbringung ermöglicht, die bei der Auftragung mehrerer Markierungen auch kostengünstiger als das Aufbringen mehrere Vormarkierungen oder das mehrfache Befahren einer Strecke, um nacheinander verschiedene Markierungen aufzubringen.

Weiterhin kann vorteilhafterweise vorgesehen sein, dass Fehler in der Vor-/Altmarkierung erkannt werden, z.B. Auslassungen in der Vor-/Altmarkierung trotz Vorgabe "durchgezogene Markierung" oder Abweichungen der Vor-/Altmarkierung von der Vorgabe "geradlinige Markierung", die z.B. durch fehlerhafte Lenkung oder Auftragung bei der Vor-/Altmarkierung oder durch spätere Beschädigung entstanden sind. Eine solche Funktionalität kann beispielweise durch geeignete Fehlererkennungs- und ergebungssoftware geleistet werden, welche die Steuerung der Markierungseinheit beeinflusst.

### Zeichnungen

Ausführungsbeispiele der Erfindung sind in den Zeichnungen dargestellt und in der nachfolgenden Beschreibung näher erläutert. Die Zeichnungen sind lediglich beispielhaft und schränken den allgemeinen Erfindungsgedanken nicht ein.

Es zeigen:
- Figur 1: Fahrzeug mit einer Markierungsvorrichtung.
- Figur 2: Eine beispielhafte Vorrichtung für eine Lenkunterstützung.

In der Beschreibung werden die Begriffe Vormarkierung, Markierung und Altmarkierung verwendet. Altmarkierung bezeichnet dabei eine alte Boden-Farbmarkierung, welche für die Positionierung einer neuen Bodenmarkierung herangezogen wird. Vormarkierung bezeichnet eine extra zum Zweck der Neumarkierung vorgesehenen Markierung. Dabei kann eine solche Vormarkierung bzw. Markierung eine Farbmarkierung sein, aber auch allgemeiner werden mit den Begriffen "Vormarkierung" und "Markierung" im Folgenden ausdrücklich auch andere Markierungen wie optische Markierungen (Laser) oder Funkmarkierungen eingeschlossen.

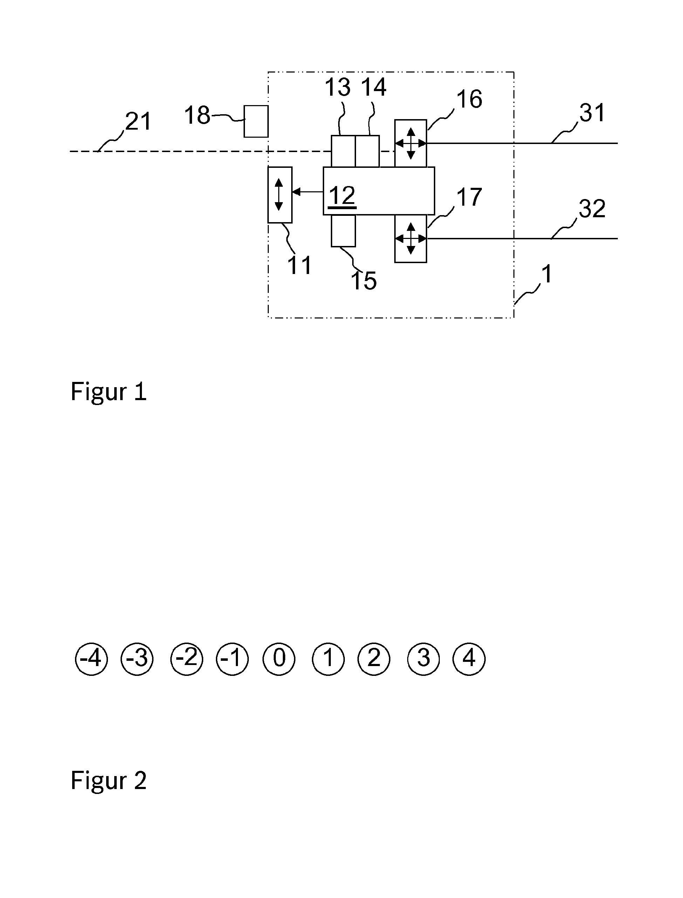

Figur 1 zeigt schematisch ein Fahrzeug 1 mit einer Markierungsvorrichtung 12. Die Markierungsvorrichtung 12 ist an dem Fahrzeug 1 angebracht und verfügt über eine erste Sensorik 13, eine zweite Sensorik 14, eine Auswerteeinheit 15, eine Markierungseinheit 16 und eine Markierungseinheit 17. Das Fahrzeug 1 verfügt über eine Lenkung 11 und weist eine Speziallampe 18 auf.

Ein Vormarkierung 21 auf dem Boden soll nun ausgenutzt werden, neue Markierungen 31 und 32 in festgelegten Abständen zur Vormarkierung 21 aufzubringen. Dazu detektiert die Sensorik 13, 14 die Vormarkierung 21 und beeinflusst das Aufbringen der Neumarkierungen 31 und 32. Dabei ist die Sensorik 13 dafür vorgesehen, die Alt-/Vormarkierung 21 in größerer Entfernung zum Fahrzeug zu erfassen, die Sensorik 14 erfasst die Vormarkierung in kleinerer Entfernung zum Fahrzeug 1. Damit ist eine Grobpositionierung der Markierungsaufbringung gemäß der Sensorik 13 und eine Feinpositionierung gemäß der Sensorik 14 möglich. Die Groberfassung ist zum Beispiel auf ca. 5 m bis 10 m Entfernung vom Fahrzeug 1 ausgerichtet und unterscheidet beispielsweise zwischen Ende und Unterbrechung der Alt-/Vormarkierung 21 oder erkennt eine Kurve.

Die Markierungseinheiten 16 und 17 bringen nun die Neumarkierungen 31 und 32 auf. Dabei sind diese Markierungseinheiten 16, 17 relativ zum Fahrzeug 1 beweglich (zumindest in Querrichtung, je nach Ausgestaltung können aber auch die anderen Richtungen vorgesehen sein) und können so aufgrund der mit der Auswerteeinheit 15 ausgewerteten Sensordaten positioniert werden. Zusätzlich zu dieser Positionierung der Markierungseinheiten 16 und 17 relativ zum Fahrzeug 1 ist vorgesehen, dass die Sensordaten der Sensorik 13 und der Sensorik 14 in der Auswerteeinheit 15 ausgewertet werden und im Folgenden die Lenkung 11 des Fahrzeugs beeinflussen. Dabei kann zum einen die Lenkung 11 automatisch nach Vorgaben der Auswerteeinheit 15 vorgenommen werden oder die Lenkung 11 durch einen Fahrer manuell erfolgen, aber unterstützt durch die Vorgaben der Auswerteeinheit 15. Ziel dieser automatischen Lenkung bzw. Lenkungsunterstützung ist, dass das Fahrzeug 1 nicht einen Zielbereich durch Querabweichungen verlässt, in welchem die Markierungseinheiten 16 und 17 durch Auslenkungen relativ zum Fahrzeug 1 die gewünschte Position der Neumarkierungen 31 und 32 noch erreichen können. Darüber hinaus ist es auch für die Genauigkeit der Neumarkierungen 31 und 32 vorteilhaft, wenn die Querabweichungen durch die Lenkung 11 minimal sind und damit die Korrekturauslenkungen der Markierungseinheiten 16 und 17 relativ zum Fahrzeug ebenfalls minimiert werden.

Das Fahrzeug 1 verfügt in diesem Ausführungsbeispiel zusätzlich noch über eine generell optionale Speziallampe 18, deren Spektraleigenschaften auf die Reflektion der Vormarkierung 21 optimiert ist und damit die Detektion der Vormarkierung 21 durch die Sensorik 13, 14 vereinfacht.

Wie in Figur 1 zeichnerisch angedeutet müssen die Neumarkierungen 31 und 32 nicht der Vormarkierung 21 entsprechen. Natürlich ist aber auch der einfachste Fall möglich, dass eine Vormarkierung an identischer Stelle mit einer Neumarkierung ersetzt werden soll. In diesem Fall ist nur eine Markierungseinheit nötig. In anderen Fällen können aber auch mehrere Markierungseinheiten vorgesehen sein, der Abstand jeder der damit aufgebrachten Neumarkierungen relativ zur Alt-/Vormarkierung ist dabei individuell einstellbar.

Für eine weitere vorteilhafte Ausgestaltung ist eine Abweichung der Neumarkierung von der Alt-/Vormarkierung möglich. Mit geeigneten Mitteln (z.B. einer Fehlererkennungs- und behebungssoftware) werden Fehler wie Auslassungen (trotz der Vorgabe einer durchgezogenen Linie) oder Abweichungen der Alt-/Vormarkierung von dem vorgesehenen (z.B. geradlinigen) Verlauf registriert und diese Fehler nicht auf die Neumarkierung übertragen, sondern durch entsprechende Steuerung der Markierungseinheit(en) die Neumarkierung ohne diese Fehler aufgebracht.

Auch die doppelte Sensorik 13, 14 ist nur optional und kann bei möglichem Verlust an Genauigkeit oder Aufbringgeschwindigkeit auch durch eine einfache Sensorik ersetzt werden oder für höhere Genauigkeit auch durch eine aufwändigere Sensorik.

Die Anordnung der Markierungsvorrichtung 12, insbesondere der Markierungseinheiten 16 und 17, der Auswerteeinheit 15 und der Sensorik 13, 14, in Figur 1 ist nur schematisch gezeigt und schränkt die vorliegende Erfindung nicht ein. Die doppelte Ausrichtung der Markierungseinheiten 16, 17 (durch automatische bzw. unterstützte Lenkung plus durch Auslenkung der Markierungseinheit) kann bei ausreichender Genauigkeit der Lenkungsausrichtung auch durch Weglassen der Positionierungsmöglichkeit der Markierungseinheiten 16, 17 relativ zum Fahrzeug 1 vereinfacht werden.

Figur 2 zeigt eine beispielhafte Ausgestaltung einer Signalvorrichtung zur Unterstützung der manuellen Lenkung des Markierungsfahrzeugs durch den Fahrer. Dabei stellen die Kreise -4, -3, ..., 3, 4 Lampen dar. Befindet sich der Fahrer exakt in der richtigen Lenkposition bezogen auf die von der Sensorik bzw. der Auswerteeinheit der Sensorik vorgegebenen Ausrichtung des Fahrzeugs zur Alt-/Vormarkierung, so leuchtet zum Beispiel die mittlere Lampe 0, zum Beispiel in grün. Bei Querablenkungen relativ zur Vormarkierung, also zu weit rechts oder zu weit links im rechten Winkel zur Fahrrichtung des Fahrzeugs, leuchtet entsprechend je nach Stärke der Abweichung eine Lampe weiter rechts oder weiter links. Zum Beispiel kann vorgesehen sein, dass die Lampen von der Mitte 0 (z.B. grün) über die Lampen 1, 2, -1, -2 (z.B. gelb) bis zu den äußeren Lampen 3, 4, - 3, -4 (z.B. rot) verschiedene Farben aufweisen. Zusätzlich kann zum Beispiel ab einer kritischen Abweichung (z.B. 3, 4, -3, -4) zusätzlich zu den optischen Signalen ein weiteres Warnsignal ausgegeben werden, z.B. ein akustisches (Warnton), ein kinästhetisches (z.B. kurzes automatisches Anbremsen des Fahrzeugs) oder ein haptisches (z.B. Vibration). Die Gestaltung der in Figur 2 gezeigten Warnampel ist dabei rein beispielhaft und schränkt den allgemeinen Gedanken einer signalunterstützten Lenkung nicht ein. Die Signale können dabei als rein optisch, akustisch, kinästhetisch, haptisch oder andere bekannte Signalarten oder Kombinationen aus diesen vorgesehen sein.

Wie zu Figur 1 erwähnt, kann nicht nur eine manuelle Lenkung durch Signale (wie zum Beispiel in Figur 2 gezeigt) unterstützt werden, sondern auch die Lenkung aufgrund der Informationen der Sensorik bzw. der Auswerteeinheit über die Position der Alt-/Vormarkierung automatische gesteuert sein. Aus Sicherheitsgründen kann es dabei nötig sein, dass der Fahrer die automatische Steuerung jederzeit unterbrechen kann, z.B. durch Eingriff in die Lenkung, durch kurzes Bremsen oder ähnliches. In dieser Entscheidung, die automatische Lenkung abzubrechen, kann der Fahrer unter Umständen auch durch Hinweise bzw. Signale aufgrund von der Sensorik festgestellter Situationen unterstütz werden. Außerdem kann es sowohl bei der unterstützten manuellen Lenkung als auch bei der automatischen Lenkung vorteilhaft sein, einen automatischen Not-Stopp vorzusehen. Das kann zum einen aus Sicherheitsgründen nötig sein, wenn das Fahrzeug zum Beispiel die Straße verlässt oder sonstige Notsituationen angezeigt werden, zum anderen ist eine Fehlmarkierung auch ein großer Kostenfaktor, so dass auch bei einem durch eine Feinpositionierung der Markierungseinheit(en) nicht mehr ausgleichbare Lenkfehlstellung auch zu einen Notstopp führen sollte.

## Patentansprüche

1. Vorrichtung (15) zur Unterstützung einer Aufbringung einer Bodenmarkierung (31, 32) mit einem Fahrzeug (1), wobei die Vorrichtung (15) Sensordaten einer Sensorik (13, 14) auswertet, wobei die Sensorik (13, 14) eine Markierung (21) erfasst, **dadurch gekennzeichnet, dass** die Vorrichtung (15) Daten ausgibt und die Daten eine Lenkung (11) des Fahrzeugs (1) unterstützen.

2. Vorrichtung (15) nach Anspruch 1, **dadurch gekennzeichnet, dass** die von der Vorrichtung (15) ausgegebenen Daten Signale auslösen und dass die Signale einen Fahrer des Fahrzeugs (1) bei der Lenkung (11) des Fahrzeugs (1) unterstützen.

3. Vorrichtung (15) nach Anspruch 2, **dadurch gekennzeichnet, dass** der Fahrer durch akustische, optische, kinästhetische oder haptische Signale unterstützt wird.

4. Vorrichtung (15) nach Anspruch 1, **dadurch gekennzeichnet, dass** die von der Vorrichtung (15) ausgegebenen Daten die Lenkung (11) des Fahrzeugs (1) automatisch steuern.

5. Vorrichtung (15) nach Anspruch 4, **dadurch gekennzeichnet, dass** ein Fahrer jederzeit die automatische Steuerung unterbrechen kann und eine manuelle Steuerung vornehmen kann.

6. Vorrichtung (15) nach Anspruch 5, **dadurch gekennzeichnet, dass** dem Fahrer durch Signale aufgrund der von der Vorrichtung (15) ausgegebenen Daten die Unterbrechung der automatischen Steuerung nahegelegt werden kann.

7. Vorrichtung (15) nach einem der vorangegangenen Ansprüche, **dadurch gekennzeichnet, dass** ein automatischer Not-Stopp erfolgen kann, wenn die von der Vorrichtung (15) ausgegebenen Daten den Not-Stopp nahelegen.

8. Vorrichtung (15) nach einem der vorangegangenen Ansprüche, **dadurch gekennzeichnet, dass** aufgrund der von der Vorrichtung (15) ausgegebenen Daten neben einer ersten Einstellung einer Position von Markierungseinheiten (16, 17) durch die unterstützte Lenkung (11) des Fahrzeugs (1) auch eine zweite Einstellung der Position der Markierungseinheiten (16, 17) durch eine Ausrichtung der Markierungseinheiten (16, 17) relativ zu dem Fahrzeug (1) erfolgt.

9. Vorrichtung (15) nach einem der vorangegangenen Ansprüche, **dadurch gekennzeichnet, dass** die Vorrichtung (15) die Sensordaten eines ersten optischen Messfühlers (13) für eine Groberfassung der Markierung (21) in größerer Entfernung zu dem Fahrzeug (1) und eines zweiten optischen Messfühlers (14) für eine Feinerfassung der Markierung (21) in kleinerer Entfernung zu dem Fahrzeug (1) auswertet.

10. Vorrichtung (15) nach einem der vorangegangenen Ansprüche, **dadurch gekennzeichnet, dass** die Vorrichtung (15) Fehler der Markierung erfasst und bei der Ausgabe der Daten korrigiert.

11. Fahrzeug (1) mit einer Vorrichtung (15) zur Unterstützung einer Aufbringung einer Bodenmarkierung (31, 32), wobei das Fahrzeug (1) eine Sensorik (13, 14) aufweist, wobei die Sensorik (13, 14) eine Markierung (21) erfasst und wobei von der Sensorik (13, 14) erfasste Daten von der Vorrichtung (15) ausgewertet werden, **dadurch gekennzeichnet, dass** das Fahrzeug (1) Mittel aufweist, eine Lenkung (11) des Fahrzeugs (1) mit den ausgewerteten Daten zu unterstützen.

12. Fahrzeug (1) nach Anspruch 11, **dadurch gekennzeichnet, dass** das Fahrzeug (1) eine Speziallampe (18) zu einer verbesserten Erfassung der Markierung (21) aufweist, wobei spektrale Eigenschaften der Speziallampe (18) auf Reflektionseigenschaften der Markierung (21) optimiert sind.

13. Fahrzeug (1) nach einem der vorangegangenen Ansprüche, **dadurch gekennzeichnet, dass** das Fahrzeug (1) mindestens eine Bodenmarkierung (31, 32) in einem vorgebbaren Abstand zu der Markierung (21) aufbringen kann.

14. Fahrzeug (1) nach Anspruch 13, **dadurch gekennzeichnet, dass** das Fahrzeug (1) mehrere Bodenmarkierungen (31, 32) in jeweils vorgebbaren Abständen zu der Markierung (21) aufbringen kann.
